## Europäisches Patentamt
## European Patent Office
## Office européen des brevets

(19)

(11) Veröffentlichungsnummer: **0 219 723**
**B1**

(12) # EUROPÄISCHE PATENTSCHRIFT

(45) Veröffentlichungstag der Patentschrift:
**18.01.89**

(51) Int. Cl.⁴: **F 23 R 3/60,** F 23 R 3/08

(21) Anmeldenummer: **86113382.5**

(22) Anmeldetag: **29.09.86**

(54) **Ringbrennkammer für Gasturbinentriebwerke.**

(30) Priorität: **04.10.85 DE 3535442**

(43) Veröffentlichungstag der Anmeldung:
**29.04.87 Patentblatt 87/18**

(45) Bekanntmachung des Hinweises auf die Patenterteilung:
**18.01.89 Patentblatt 89/3**

(84) Benannte Vertragsstaaten:
**DE FR GB IT SE**

(56) Entgegenhaltungen:
**CH-A- 255 541**
**CH-A- 310 039**
**FR-A- 1 435 410**
**GB-A- 2 015 651**
**GB-A- 2 074 307**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Hanser, Hagen, Waidhornstrasse 58 B, D-8000 München 50 (DE)**

# Beschreibung

Die Erfindung bezieht sich auf eine Ringbrennkammer nach dem ersten Teil des Patentanspruchs 1.

Gasturbinentriebwerke haben im allgemeinen Ringbrennkammern mit ringförmigen Flammrohren, die aus Blech oder aus gerollten, verschweissten Schmiederingen gefertigt sind. Neueste Entwicklungen gehen darin, zur Senkung der Reparaturkosten und zur Erhöhung der Haltbarkeit eine Flammrohrinnenauskleidung in Form von Schindeln oder Schuppen zu verwenden. Bei letzterer Form wird der Aufwand durch die Vielzahl schindel- oder schuppenartiger Einzelelemente und die damit verknüpfte, verhältnismässig grosse Anzahl an Dichtungen sehr gross.

Im Betrieb einer derartigen Ringbrennkammer ergeben sich ferner verhältnismässig grosse thermisch bedingte Differenzdehnungen zwischen den im Heissgasstrom liegenden Verkleidungssektionen und deren Tragkörpern, die als Bestandteile der Flammrohraussenwandstruktur mittels vom Verdichterende entnommener Luft umspült sind. Die hierdurch verursachten Wärmespannungen können zu unerwünschten Verformungen, im Extremfall zu Rissen oder gar Brüchen der Verkleidungssektionen führen.

Bei einer aus der US-A-4,480,436 bekannten, der eingangs genannten Gattung (Oberbegriff des Patentanspruchs 1) zugrunde gelegten Brennkammer besteht die Flammrohrauskleidung aus einer verhältnismässig grossen Anzahl in Achs- und Umfangsrichtung zergliederter Verkleidungselemente. Dabei weisen die die Abstufungen des Flammrohrs ausbildenden Radialwandabschnitte der Tragkörperstruktur in Umfangsrichtung sich erstreckende sowie axial einander gegenüberliegend auskragende Zungen auf, über welche die Verkleidungselemente in Umfangsrichtung im Wege entsprechend korrespondierender Gegenausnehmungen der Reihe nach in die Tragkörperstruktur einschiebbar sind. In Umfangsrichtung sollen die Verkleidungselemente über unmittelbar miteinander korrespondierende Nut-Feder-Verbindungsmittel ineinandergreifen. Im bekannten Fall sind ferner Axialsektionen der Tragkörperstruktur mittels im wesentlichen über die gesamte Flammrohrlänge sich erstreckender Axialflansche untereinander verschraubt. Ein Herauslösen beschädigter Verkleidungselemente setzt also eine vergleichsweise komplizierte Teilzerlegung der Tragstruktur voraus, indem erst nach Herauslösung zumindest einer Axialsektion auch die betreffenden Verkleidungselemente Schritt um Schritt in Umfangsrichtung herauslösbar sind.

Die zum vorliegenden bekannten Fall erörterte Tragkörperzergliederung und Befestigungsweise dürfte zudem nachteilhafte Konsequenzen in der Bauteilfestigkeit, der Abdichtung und des Brennkammergewichts nach sich zu ziehen haben.

Hinsichtlich der stets unmittelbar gegen den Brennraum auskragenden Radialwandteile der Tragkörperstruktur ist im vorliegenden bekannten Fall ferner keine konsequente Heissgasabschirmung der Tragkörperstruktur im wesentlichen über die gesamte Flammrohrlänge möglich; örtlich unterschiedlich starke Bauteiltemperaturgradienten können somit der gewünschten «freien Dehnbarkeit» der Verkleidungselemente durchaus im Wege stehen.

Dem zuletzt genannten Problem dürfte allenfalls teilweise durch eine hochintensive Bauteilkühlung abgeholfen werden können, die im vorliegenden bekannten Fall unter anderem durch eine Aufprallkühlung der Verkleidungselemente sowie deren aufhängungsseitiger Partien in Kombination mit einer Filmkühlung dargestellt ist, bei der axial gerichtete Kühlluftbohrungen in den Radialwandteilen der Tragkörperstruktur mit von aussen (Sekundärkanal) kühlluftbeaufschlagten Ringräumen — zwischen den jeweiligen Verkleidungselementen und betreffenden Tragkörpersektionen — in Verbindung stehen.

Bei einer aus der US-A-2,544,538 bekannten, doppelwandigen Rohrbrennkammer für Gasturbinentriebwerke sollen zwar schon an einer einstückig rotationssymmetrischen äusseren Tragstruktur sich in Längsrichtung erstreckende innere Auskleidungselemente frei dehnbar aufgehängt sein.

Die vorliegende bekannte Lösung kann aber bereits in Ermangelung eines in Längsrichtung stufenförmigen Flammrohr-Doppelwandkonzepts nach der eingangs genannten Gattung nicht zur Erfindung hinführen.

Im einzelnen sollen bei der vorliegenden bekannten Rohrbrennkammer in verhältnismässig komplizierter Weise die Auskleidungselemente im wesentlichen über deren gesamte Baulänge an kanalförmigen, nach innen offenen Längsträgern aufgehängt sein, die ihrerseits wiederum über laschenförmige Querträger an der Innenfläche der äusseren Tragstruktur befestigt sind; dabei sollen zwei jeweils benachbarte Verkleidungselemente mittels zweier in Längsrichtung entgegengerichtet laschenförmig nach innen abgebogener Endkanten über hierzu korrespondierend beidseitig nach innen abgewinkelte Endzungen der offenen Längsträger geschoben sein.

Als Folge der angegebenen Bauweise ergeben sich verhältnismässig lange reibschlüssige gegenseitige Kontaktflächen sowie verhältnismässig ausgeprägte gegenseitige Wärmeübergangsflächen zu Lasten der «freien Dehnbarkeit» der Elemente, insbesondere im Hinblick auf instationäre Betriebszustände.

Im übrigen sollen die einzelnen Verkleidungselemente bei der bekannten Rohrbrennkammer gegen axiale Verschiebung dadurch gesichert werden können, dass die Elemente an den vorderen und hinteren Enden radial nach innen gegen die betreffenden Endflächen der offenen Längsträger abbiegbare Abdeckkanten aufweisen. Auf diese Weise wird der insbesondere im Hinblick auf eine gradflächige Doppelwand-Flammrohrweise an sich mögliche Vorteil einer vergleichsweise einfachen Elementtauschbarkeit weitestgehend wieder zunichte gemacht.

Der Erfindung liegt die Aufgabe zugrunde, eine Ringbrennkammer nach der eingangs angegebenen Art zu schaffen, bei der die schuppen- oder schindelförmige Flammrohrauskleidung unter gleichzeitiger Beherrschung der thermisch bedingten Differenzdehnungen extrem montage- und wartungsfreundlich ausgebildet und angeordnet werden soll.

Die gestellte Aufgabe ist mit den Merkmalen des Kennzeichnungsteils des Patentanspruchs 1 erfindungsgemäss gelöst.

Als Folge der sich im wesentlichen über die gesamte Flammrohrinnenlänge erstreckenden, in Integralbauweise ausgeführten, schindel- bzw. schuppenartigen bzw. -ähnlichen Auskleidungselemente entfällt somit eine auf die Anzahl jeweils erforderlicher Flammrohrabstufungen in Flammrohrlängsrichtung abzustimmende aufwendige Einzelelementfestlegung und -verankerung an den betreffenden Tragkörpern.

Es ergeben sich also streifenförmige Elemente, die sich jeweils mit einer einzigen Handbewegung in die betreffenden Umfangsnuten in axialer Richtung einschieben lassen. Sind mehrere streifenförmige Elemente zu einer Ringblecheinheit zusammengefügt, so kann diese im Wege eines einzigen, in Umfangsrichtung verlaufenden Bauteils gegen axiales Verschieben gesichert werden. Gleichzeitig mit dem Einschieben der Elemente in den Tragkörper schliessen die schindelförmigen Sektionen eines jeweiligen streifenförmigen Elements Einzelringkammern zwischen sich und den korrespondierenden stufenförmigen Gegensektionen des betreffenden Tragkörpers ein.

Dadurch, dass die Elemente in Umfangsrichtung geteilt sind, also als besagte stufenförmige Längsstreifen in Umfangsrichtung lose aneinanderliegen, und durch örtlich entsprechende Positionierung und Dimensionierung der betreffenden streifenförmigen Elemente gegenüber dem Axialsicherungsbauteil gelingt es einfachst, die Elemente frei dehnbar anzuordnen. Die Elemente sind dabei also auch in relativ begrenztem Umfang lose an den betreffenden Tragkörpern aufgehängt, können sich der Temperaturbelastung anpassen und frei dehnen, ohne Kräfte auf andere Teile zu übertragen oder auszuüben.

Vorteilhafte Ausgestaltungen der Erfindung gehen aus den Patentansprüchen 2 bis 9 hervor. Anhand der Zeichnungen ist die Erfindung beispielsweise weiter erläutert; es zeigen:

Fig. 1 die zu einer Ringbrennkammer gehörigen, jeweils äusseren und inneren ringförmigen Tragkörper mit daran befestigten inneren Auskleidungselementen, jeweils als Längsschnitt dargestellt und

Fig. 2 die perspektivische Ansicht eines zum äusseren Tragkörper nach Fig. 1 gehörenden Verkleidungselements.

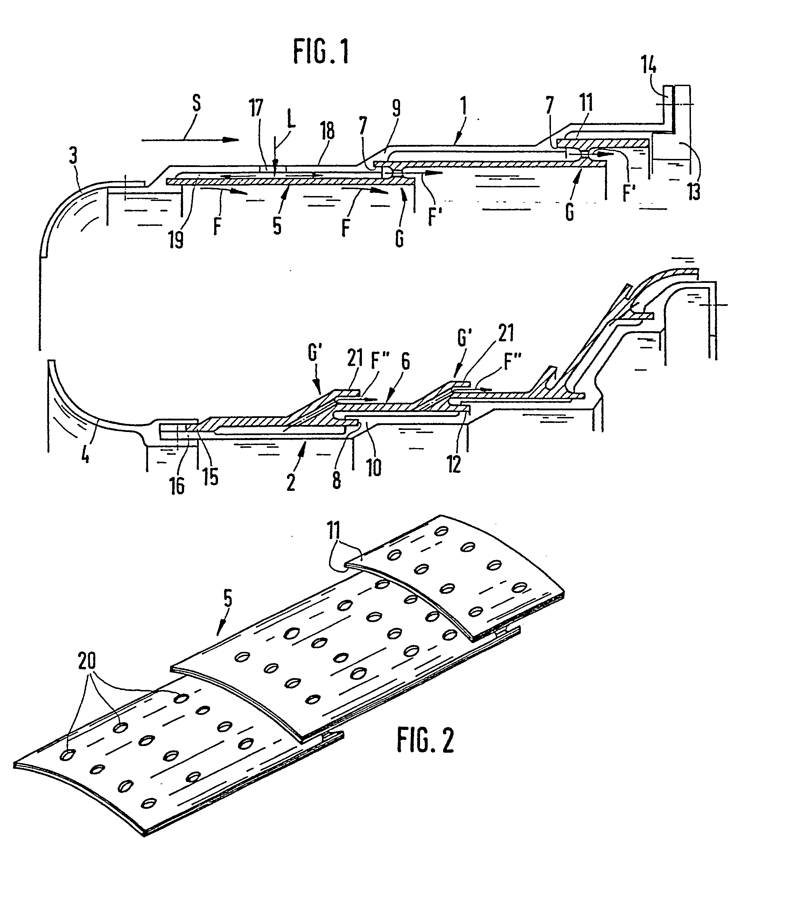

Bei einer Ringbrennkammer nach Fig. 1 ist ein koaxial zur Triebwerksachse angeordnetes Flammrohr vorgesehen, welches hier u.a. aus einem äusseren ringförmigen Tragkörper 1 und einem inneren ringförmigen Tragkörper 2 sowie äusseren und inneren Flammrohrrückwandabschnitten 3, 4 besteht. In nicht dargestellter Weise wird ein solches Flammrohr von einer äusseren und inneren Gehäusewand mit Radialabstand so ummantelt, dass zwischen dem Flammrohr und den genannten Gehäusewänden jeweils ein äusserer und ein innerer ringförmiger Sekundärluftkanal gebildet sind, von denen aus das Flammrohr gegebenenfalls u.a. mit Primär-, Sekundär- und Tertiärluft sowie Kühlluft beaufschlagt werden kann. Ferner sind bei einer derartigen Ringbrennkammer hier nicht weiter dargestellte Brennstoffeinspritzmittel, z.B. mit Luft-Unterstützung arbeitende Brennstoffdüsen oder Brennstoff-Verdampfungs-Brenner vorgesehen, die, gleichförmig über dem Umfang der Brennkammer verteilt, von der Flammrohrrückwand (Abschnitte 3, 4) aus axial gegen die Primärzone ins Flammrohr auskragen.

Bei der Ringbrennkammergestaltung nach Fig. 1 wird also von einer in Kammerlängsrichtung stufenförmig abgesetzten Flammrohrdoppelwandstruktur ausgegangen.

Erfindungsgemäss besteht die dem heissen Brenngasstrom zugekehrte Auskleidung im Flammrohr aus sich im wesentlichen über die gesamte Flammrohrinnenlänge erstreckenden, integralen, in Umfangsrichtung geteilten Elementen 5, 6, die frei dehnbar an Umfangsnuten 7, 8 der Tragkörper 1, 2 aufgehängt sind.

Dabei können die Umfangsnuten 7, 8 in die Abstufungen bildenden Radialwandabschnitten 9, 10 der Tragkörper 1, 2 angeordnet sein.

Wie ferner in Fig. 1 dargestellt, können z.B. gemäss Positionen G, G' die Elemente 5, 6 gabelförmig abgestuft sein und mittels entweder in (Fig. 1, unten) oder entgegen der Hauptströmungsrichtung (Fig. 1, oben) im Flammrohr axial auskragender Endabschnitte 11 bzw. 12 in die Umfangsnuten 7 bzw. 8 eingreifen.

Im Interesse einer einfachen Montage und Wartung ist es vorteilhaft, dass die Elemente 5 bzw. 6, nach dem Einsetzen in die Umfangsnuten 7 bzw. 8, durch ein einziges, mit einem Tragkörper 5 bzw. 6 zu verbindendes Bauteil axial gesichert werden können.

Gemäss Fig. 1 (oben) kann es sich bei diesem Bauteil um einen Sicherungsring 13 handeln, der an einem Radialflansch 14 am hinteren Ende des Tragkörpers 1 festlegbar ist, z.B. durch Schrauben und Muttern oder dergleichen.

Wie in Fig. 1 (unten) dargestellt, kann als axiale Sicherung der betreffenden Verkleidungselemente 6 auch z.B. der eine Flammrohrrückwandabschnitt 4 verwendet werden, indem dieser gemeinsame Endabschnitte 15 und 16 der Elemente 6 und des Tragkörpers 2 gabelförmig umgreift.

Im Interesse einer hohen Betriebssicherheit können die Elemente aus einer hochwarmfesten Gusslegierung, z.B. auf Nickel- (H 188) oder Kobaltbasis (C 263), gefertigt sein.

Als Alternative zu derartigen metallischen Werkstoffen könnten die Elemente auch aus einem hochwarmfesten ingenieurkeramischen Werkstoff, z.B. aus der Gruppe der Karbide wie Siliziumkarbid (SiSiC), selbstgesintertem Siliziumkarbid (SSiC) oder aus der Gruppe der Nitride, wie Sili-

ziumnitrid ($Si_3N_4$) heissgepresst oder selbstsinternd, gefertigt sein.

Die hohe Temperatur- und Abbrandbeständigkeit derartiger oder ähnlicher keramischer Werkstoffe führt zu einer vergleichsweise hohen Lebensausdauererwartung der Verkleidungselemente. Wegen ihrer im allgemeinen günstigen Wärmeisolationseigenschaften stellen die betreffenden keramischen Verkleidungselemente äusserst wirksame «Schutzschilde» gegenüber den metallischen Tragkörpern dar. Die genannte Anwendung keramischen Materials kann zu einer Verringerung des Kühlaufwands, zumindest im Verkleidungsbereich, führen.

Im übrigen wird davon ausgegangen, dass beim Brennkammerkonzept gemäss Fig. 1 und 2 eine wirksame Kühlung der betreffenden ringförmigen Tragkörper 1, 2 und der Verkleidungselemente 5, 7 mittels vom Verdichterende entnommener Hochdruckluft gewährleistet wird, in dem für die Tragkörper 1, 2 eine Konvektionskühlung, für die Verkleidungselemente 5, 6 gegebenenfalls eine Kombination aus Konvektions- und Filmkühlung bzw. eine Kombination aus Konvektions-, Aufprall- und Filmkühlung vorgesehen sein kann.

Wie z.B. in Fig. 1 – links oben – gezeigt, können aus dem die äussere Sekundärluftströmung (Pfeil S) enthaltenden Ringkanal Teilluftmengen (Pfeil L) entnommen und über Bohrungen 17 in den abgestuften Wandteilen 18 des Tragkörpers 1 den betreffenden Ringkammern 19 unter gleichförmiger Axialaufspaltung zugeführt werden. Von den Ringkammern 19 aus kann dann die Kühlluft über Lochreihen 20 (Fig. 2) dem Flammrohrinnern zugeführt werden. Nach dem Eintritt ins Flammrohr schmiegt sich die so zugeführte Kühlluft zunächst filmartig (Pfeile F) an äussere Oberflächenabschnitte der Verkleidungselemente 5 an.

Es sei ferner vermerkt, dass die Axialspalte zwischen den in Umfangsrichtung geteilten Verkleidungselementen 5, 6 durch selbständiges Ausrichten derselben im Betrieb weitestgehend gegeneinander abgedichtet werden. Sofern mit Rücksicht auf Formtoleranzschwankungen oder Übergangsbetriebszustände geringe Axialspalte verbleiben, so können diese im Wege der gemäss Fig. 1 (links oben) geschilderten Kühlluftzufuhr (Spaltluftübertritt) abdichtend überbrückt werden.

Gemäss Fig. 1 können ferner die betreffenden gabelförmigen Sektionen G bzw. G' der Verkleidungselemente 5 bzw. 6 mit parallel bzw. schräg zur Kammerlängsachse verlaufenden Kühlluftbohrungen ausgestattet sein, über welche Kühlluft gemäss Pfeilen F', F'' zwecks zusätzlicher Wandkühlfilme zugeführt werden kann.

Gemäss Fig. 1 – unten – wird eine gezielte Wandfilmkühlung dadurch unterstützt, dass die gabelförmigen Sektionen G' zusätzlich mit gegenüber axparallelen Abschnitten der betreffenden Verkleidungselemente 6 radial/axial auskragenden Umfangswandabschnitten 21 ausgestattet sind, die im übrigen einen weiteren Beitrag erhöhter Formsteifigkeit der Elemente 6 bilden.

## Patentansprüche

1. Ringbrennkammer für Gasturbinentriebwerke mit einer in Kammerlängsrichtung stufenförmig abgesetzten Doppelwandstruktur des Flammrohrs, die äussere und innere, gegenüber dem Brennraum schindel- oder schuppenartig ausgekleidete Tragkörper aufweist, an denen Auskleidungselemente frei dehnbar aufgehängt sind, gekennzeichnet durch folgende Merkmale:

a) die Auskleidung besteht aus sich im wesentlichen über die gesamte Länge des Flammrohrs erstreckenden streifenförmigen einstückigen Elementen (5, 6), die

b) in Umfangsrichtung verlaufende Zungen (11, 12) aufweisen, mit denen sie axial in entsprechende, in radialen Abschnitten der Tragkörper (1, 2) ausgebildete Umfangsnuten (7, 8) eingeschoben sind und die

c) je Ringwand jeweils gemeinsam durch ein einziges Bauteil (4, 13) axial gesichert sind.

2. Brennkammer nach Anspruch 1, dadurch gekennzeichnet, dass die Elemente (5, 6) gabelförmig abgestuft sind und mittels entweder in oder entgegen der Hauptströmungsrichtung im Flammrohr axial auskragender Zungen (11, 12) in die Umfangsnuten (7, 8) eingreifen.

3. Brennkammer nach Anspruch 1 oder 2, dadurch gekennzeichnet, dass das Bauteil ein Sicherungsring (13) ist.

4. Brennkammer nach Anspruch 1 oder 2, dadurch gekennzeichnet, dass das Bauteil ein Flammrohrrückwandabschnitt (4) ist.

5. Brennkammer nach Anspruch 4, dadurch gekennzeichnet, dass der Flammrohrrückwandabschnitt (4) gemeinsame Endabschnitte (15, 16) der Elemente (6) und des Tragkörpers (2) gabelförmig umgreift.

6. Brennkammer nach einem oder mehreren der Ansprüche 1 bis 5, dadurch gekennzeichnet, dass die Elemente aus einer hochwarmfesten Gusslegierung, z.B. auf Nickel- oder Kobaltbasis, gefertigt sind.

7. Brennkammer nach einem oder mehreren der Ansprüche 1 bis 6, dadurch gekennzeichnet, dass die Elemente aus einem hochwarmfesten ingenieurkeramischen Werkstoff, z.B. aus der Gruppe der Karbide wie Siliziumkarbid (SiSiC), selbstgesintertem Siliziumkarbid (SSiC) oder aus der Gruppe der Nitride, wie Siliziumnitrid ($Si_3N_4$) heissgepresst oder selbstsinternd, gefertigt sind.

8. Brennkammer nach einem oder mehreren der Ansprüche 1 bis 7, dadurch gekennzeichnet, dass gabelförmig abgestufte Sektionen (G, G') der Verkleidungselemente (5, 6) zwecks Wandfilmkühlung (F', F'') mit Luftzufuhrbohrungen ausgestattet sind, die mit luftbeaufschlagten Ringkammern (19, 19') – zwischen den Elementen (5, 6) und den Tragkörpern (1, 2) – kommunizieren.

9. Brennkammer nach Anspruch 8, dadurch gekennzeichnet, dass die gabelförmigen Sektionen (G') mit gegenüber axparallelen Wandabschnitten der Verkleidungselemente (6) axial/radial auskragenden Umfangswandabschnitten (21) ausgestattet sind, die gegenüber den axparallelen Wandabschnitten Zwischenräume einschliessen, aus denen Kühlluft (F'') zwecks Wandfilmkühlung zugeführt wird.

## Claims

1. Annular combustion chamber for gas turbine propulsion units with, set back stepwise in the longitudinal direction of the chamber, a double-walled flame tube structure comprising outer and inner scale or shingle-like supporting members which are lined in relation to the combustion chamber and from which lining elements are suspended in freely expansible fashion, characterised by the following features:

a) the lining consists of strip-like one-piece elements (5, 6) which extend substantially over the entire length of the flame tube and which

b) comprise peripherally extending tongues (11, 12) by which they are pushed axially into corresponding peripheral grooves (7, 8) constructed in radial portions of the supporting members (1, 2) and which

c) in respect of each annular wall are axially secured jointly by one single component (4, 13).

2. Combustion chamber according to Claim 1, characterised in that the elements (5, 6) are stepped in bifurcated fashion and have tongues (11, 12) which project axially either in or against the main direction of flow in the flame tube and engage into the peripheral grooves (7, 8).

3. Combustion chamber according to Claim 1 or 2, characterised in that the component is a retaining ring (13).

4. Combustion chamber according to Claim 1 or 2, characterised in that the component is a portion (4) of the rear wall of the flame tube.

5. Combustion chamber according to Claim 4, characterised in that the rear portion (4) of the flame tube engages in bifurcated fashion around common end portions (15, 16) of the elements (6) and of the supporting member (2).

6. Combustion chamber according to one or more of Claims 1 to 5, characterised in that the elements are produced from a highly heat resistant cast alloy, e.g. an alloy based on nickel or cobalt.

7. Combustion chamber according to one or more of Claims 1 to 6, characterised in that the elements are produced from a highly heat resistant engineering-ceramic material, e.g. from the group of carbides such as silicon carbide (SiSiC), self-sintered silicon carbide (SSiC) or from the nitride group such as silicon nitride ($Si_3N_4$) by a heat-pressing or self-sintering process.

8. Combustion chamber according to one or more of Claims 1 to 7, characterised in that sections (G, G') of the cladding elements (5, 6) which are stepped in bifurcated manner are, for wall film cooling (F', F''), provided with air supply ports which communicate with annular chambers (19, 19') which are exposed to air, between the elements (5, 6) and the supporting members (1, 2).

9. Combustion chamber according to Claim 8, characterised in that the bifurcated sections (G') are provided with, projecting axially/radially in relation to axially parallel wall portions of the cladding elements (6), peripheral wall portions (21) which, opposite the axially parallel wall portions, enclose intermediate spaces from which cooling air (F'') is supplied for the purpose of wall film cooling.

## Revendications

1. Chambre de combustion annulaire pour groupes d'entraînement de turbines à gaz, avec une structure à double paroi du tube à flamme, qui est étagée en forme de degrés dans la direction longitudinale de la chambre, qui possède des corps porteurs extérieurs et intérieurs habillés d'un genre de bardeaux ou bien d'écailles vis-à-vis de la chambre de combustion, auxquels sont accrochés des éléments de chemisage librement dilatables, caractérisée par les caractéristiques suivantes:

a) l'habillage se compose d'éléments en une pièce (5, 6), en forme de bandes, qui s'étendent sur toute la longueur du tube à flamme, qui

b) possèdent des languettes (11, 12) se développant en direction périphérique, avec lesquelles elles sont poussées axialement dans des rainures périphériques (7, 8) correspondantes conformées dans des sections radiales des corps supports (1, 2) et que

c) chaque paroi annulaire est à chaque fois assurée axialement ensemble par une unique partie constitutive (4, 13).

2. Chambre de combustion selon la revendication 1, caractérisée en ce que les éléments (5, 6) sont étagés en forme de fourche et engrènent dans les rainures périphériques (7, 8) au moyen de languettes (11, 12) faisant saillie axialement dans le tube à flamme soit en direction de l'écoulement principal, soit contre la direction de l'écoulement principal.

3. Chambre de combustion selon la revendication 1 ou 2, caractérisée en ce que la partie constitutive est une section arrière de tube à flamme (4).

5. Chambre de combustion selon la revendication 4, caractérisée en ce que la section de paroi arrière de tube à flamme (4) englobe en une forme de fourche des sections d'extrémité (15, 16) communes des éléments (6) et du corps porteur (2).

6. Chambre de combustion selon une ou plusieurs des revendications 1 à 5, caractérisée en ce que les éléments sont fabriqués à partir d'un alliage de fusion, à haute résistance en température, par exemple à base de nickel ou de cobalt.

7. Chambre de combustion selon une ou plusieurs des revendications 1 à 6, caractérisée en ce que les éléments sont fabriqués en un matériau céramique à haute résistance en température, par exemple du groupe des carbures, tel que le carbure de silicium (SiSiC), le carbure de silicium autofrittant (SSiC) ou bien du groupe des nitrures, tels que le nitrure de silicium ($Si_3N_4$) pressé à chaud ou bien autofrittant.

8. Chambre de combustion selon une ou plusieurs des revendications 1 à 7, caractérisée en ce que des sections (G, G'), étagées et en forme de fourche, des éléments de chemisage (5, 6) sont équipées d'alésages d'alimentation d'air, dans le but d'un refroidissement de paroi en film (F', F'') et communiquent — entre les éléments (5, 6) et les corps enveloppes (1, 2) — avec des chambres annulaires (19, 19') soumises à l'air.

9. Chambre de combustion selon la revendication 8, caractérisée en ce que les sections (G') en forme de fourche sont équipées de sections de parois périphériques (21) faisant saillie axialement/radialement face aux sections de parois des éléments de chemisage qui sont parallèles à l'axe et qui incluent des espaces intermédiaires, face aux sections de paroi qui sont parallèles par rapport à l'axe desquelles est amené de l'air de refroidissement (F''), dans le but d'un refroidissement de paroi en film.

EP 0 219 723 B1

# FIG.1

# FIG.2